**Europäisches Patentamt**

**European Patent Office**

**Office européen des brevets**

(11) Veröffentlichungsnummer: **0 255 723**
**A1**

## (12) EUROPÄISCHE PATENTANMELDUNG

(21) Anmeldenummer: 87111294.2

(51) Int. Cl.⁴: **H02K 49/10** , H02K 49/00

(22) Anmeldetag: 05.08.87

(30) Priorität: 08.08.86 DE 3626934

(43) Veröffentlichungstag der Anmeldung:
10.02.88 Patentblatt 88/06

(84) Benannte Vertragsstaaten:
AT BE CH ES FR GB GR IT LI LU NL SE

(71) Anmelder: **Klein, Schanzlin & Becker Aktiengesellschaft**
**Johann-Klein-Strasse 9**
**D-6710 Frankenthal(DE)**

(72) Erfinder: **Bieniek, Kurt, Dr.**
**Glockengasse 19**
**D-6710 Frankenthal(DE)**
Erfinder: **Heumann, Anton**
**Salzburger Strasse 103**
**D-8500 Nürnberg(DE)**

(54) Spaltrohr für eine permanent-magnetische Kupplung.

(57) Mit der Erfindung wird ein Spaltrohr für Magnet-kupplungen vorgeschlagen, das die Vorteile der bisher verwendeten Spaltrohre aus Metall und aus Kunststoff weitgehend miteinander vereinigt.

Eine hohe Festigkeit des Spaltrohres wird bei geringen Wirbelverlusten dadurch erreicht, daß das Spaltrohr zumindest im Bereich des zwischen den Antriebsmagneten (1) und den Abtriebsmagneten (2) wirkenden Magnetfeldes (3) aus einem innenliegenden Metallrohr (4) und einer das Metallrohr abstützenden Umhüllung (5) aus einem elektrisch nichtleitenden Material besteht.

EP 0 255 723 A1

## Spaltrohr für eine permanentmagnetische Kupplung

Die Erfindung betrifft ein Spaltrohr gemäß dem Oberbegriff des Anspruches 1.

Bei Kreiselpumpen mit einem Antrieb über eine permanentmagnetische Kupplung muß das Spaltrohr den gesamten Innendruck der Pumpe aufnehmen. Die Möglichkeit, das Spaltrohr im Bereich der Magnete abzustützen, besteht nicht, da sich beide Magnete relativ zum Spaltrohr bewegen. Die Dimensionierung des Spaltrohres ergibt je nach Druck, Temperatur, Werkstoff und Durchmesser Wanddicken von einem Millimeter oder mehr.

Da das zwischen den Antriebs-und dem Abtriebsmagneten gebildete Magnetfeld das Spaltrohr schneidet, werden in einem metallischen Spaltrohr Wirbelströme erzeugt, die um so größer sind, je dicker das Spaltrohr ist. Um dieser Erscheinung zu begegnen, wurde bereits vorgeschlagen (DE-PS 26 24 058), das Spaltrohr aus einem Material mit einem hohen spezifischen elektrischen Widerstand, beispielsweise Kunststoff, herzustellen. Da aber bei Kunststoff oft nicht die erforderliche Beständigkeit gegen angreifende Fördermedien gegeben ist, bleibt deren Einsatzbereich beschränkt. Es kommt hinzu, daß die bei höheren Anforderungen an die Festigkeit zu verwendenden faserverstärkten Kunststoffe vielfach nicht die notwendige hermetische Dichtheit besitzen. Auch andere Stoffe mit einem hohen spezifischen elektrischen Widerstand kommen für die hier in Rede stehende Verwendung kaum in Frage. So weist beispielsweise Keramik den Mangel einer hohen Sprödigkeit auf.

Der Erfindung liegt die Aufgabe zugrunde, ein Spaltrohr der eingangs genannten Art zu schaffen, das eine hohe Festigkeit aufweist, bei dem aber die hohen Verluste der in rein metallischen Spaltrohren entstehenden Wirbelströme vermieden werden.

Diese Aufgabe wird erfindungsgemäß durch die im kennzeichnenden Teil des Anspruches 1 genannten Merkmale gelöst.

Die Erfindung erlaubt die Verwendung eines relativ dünnen Metallrohres, in dem nur noch ein der geringen Wandstärke entsprechender Wirbelstromanteil entsteht. Das allein der Abstützung dienende nichtleitende Material bietet den Vorteil, daß es auch bei größeren Wandstärken das Magnetfeld der rotierenden Magnete der Kraftübertragung ohne Wirbelstromverluste durchläßt.

Als abstützende Umhüllung bieten sich insbesondere die zur Verfügung stehenden hochfesten Kunststoffe an. Hier ist vor allem an GFK-und CFK-Materialien zu denken.

Das innenliegende Metallrohr, das völlige Dichtheit gewährleistet, läßt sich in vorteilhafter Weise noch als Wickelkörper für die Verstärkungsfaser des umhüllenden Kunststoffes verwenden. Auf eine Bearbeitung des Innendurchmessers kann somit verzichtet werden.

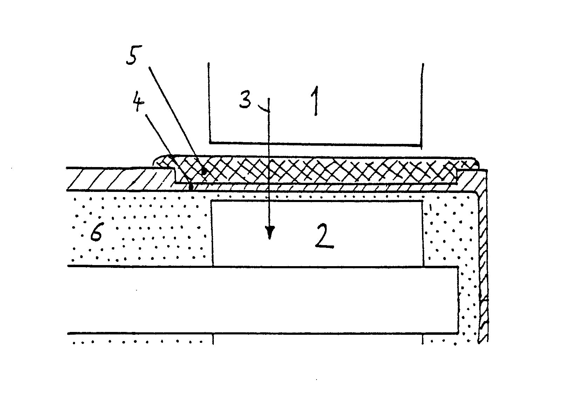

Anhand eines Ausführungsbeispiels wird die Erfindung näher erläutert. Die Zeichnung zeigt einen Ausschnitt aus einer Magnetkupplung mit einem erfindungsgemäß gestalteten Spaltrohr.

Der dargestellte hermetisch dichte Antrieb besteht aus rotierenden Antriebsmagneten (1) und Abtriebsmagneten (2), zwischen welchen ein Magnetfeld (3) gebildet wird. Das Magnetfeld (3) schneidet das zwischen den Magneten (1) und (2) angeordnete Spaltrohr, das im Bereich des Magnetfeldes (3) aus einem dünnen Metallrohr (4) und einer das Metallrohr (4) abstützenden Umhüllung (5) aus faserverstärktem Kunststoff besteht.

Das innenliegende Metallrohr (4) dient vor allem der Abdichtung eines Raumes (6), in welchem sich ein unter Druck stehendes Medium befindet. Die durch den vorhandenen Druck gegebene Belastung wird dabei weitgehend von der abstützenden Umhüllung (5) aufgenommen.

## Ansprüche

1. Spaltrohr für eine permanentmagnetische Kupplung, welches einen flüssigkeitsdichten Abschluß zwischen zwei Räumen bildet, in denen jeweils Antriebsmagnete (1) und Abtriebsmagnete (2) angeordnet sind, **dadurch gekennzeichnet,** daß das Spaltrohr zumindest im Bereich des zwischen den Antriebsmagneten (1) und den Abtriebsmagneten (2) wirkenden Magnetfeldes (3) aus einem innenliegenden Metallrohr (4) und einer das Metallrohr (4) abstützenden Umhüllung (5) aus einem elektrisch nichtleitenden Material besteht.

2. Spaltrohr nach Anspruch 1, dadurch gekennzeichnet, daß die das Metallrohr (4) abstützende Umhüllung (5) aus einem faserverstärkten Kunststoff gebildet wird.

3. Spaltrohr nach den Ansprüchen 1 und 2, dadurch gekennzeichnet, daß das Metallrohr (4) als Wickelkörper für die Verstärkungsfaser des faserverstärkten Kunststoffes dient.

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl.4) |
|---|---|---|---|
| X | FR-A-2 209 248 (FEHR et al.) <br> * Seite 1, Zeilen 1-10; Seite 1, Zeile 36 - Seite 2, Zeile 19; Seite 5, Zeilen 18-24; Seite 9, Zeilen 17-36; Figuren 1,2,4 * <br> --- | 1-3 | H 02 K 49/10 <br> H 02 K 49/00 |
| X | GB-A-2 145 882 (TETSUYA SATO) <br> * Seite 1, Zeilen 1-61; Seite 7, Zeilen 18-23; Figuren 8,15 * <br> --- | 1 | |
| A | GB-A-1 414 949 (LAING) <br> * Seite 1, Zeilen 10-22; Seite 2, Zeilen 91-102; Figuren 2,4 * <br> ----- | 2 | |

RECHERCHIERTE SACHGEBIETE (Int. Cl.4)

H 02 K 49/10

Der vorliegende Recherchenbericht wurde für alle Patentansprüche erstellt

| Recherchenort | Abschlußdatum der Recherche | Prüfer |
|---|---|---|
| DEN HAAG | 06-11-1987 | LE GUAY P.A. |